# EUROPEAN PATENT SPECIFICATION

(11) **EP 0 876 760 B1**
(45) Date of publication and mention of the grant of the patent: **25.09.2002**
(21) Application number: 98111541.3
(22) Date of filing: 09.05.1995
(51) Int. Cl.: A01K 89/01

(54) **Line roller for spinning reel for fishing**
Schnurführungsrolle für Angelwinde
Galet de guidage pour moulinet de pêche

(30) Priority: 11.05.1994 JP 9774094; 11.05.1994 JP 9774194; 12.05.1994 JP 9872794; 25.05.1994 JP 709494 U; 27.07.1994 JP 17584394; 27.07.1994 JP 17585694; 29.07.1994 JP 17874594; 14.12.1994 JP 31033594; 24.01.1995 JP 906695; 26.10.1994 JP 26277394
(43) Date of publication of application: 11.11.1998
(62) Divisional of application: 95107034.1
(73) Proprietor: DAIWA SEIKO INC., Higashikurume-shi, Tokyo (JP)
(72) Inventor: Kaneko, Kyoichi, Higashikurume-shi, Tokyo (JP); Shinohara, Eiji, Higashikurume-shi, Tokyo (JP); Katayama, Masatoshi, Kodaira-shi, Tokyo (JP); Tsutsumi, Wataru, Saitama (JP)
(74) Representative: Grünecker, Kinkeldey, Stockmair & Schwanhäusser Anwaltssozietät

(56) References cited:
- FR-A- 1 252 667
- JP-Y- 3 017 661
- US-A- 2 728 534
- US-A- 2 836 375
- US-A- 4 562 976
- US-A- 4 767 080

## Description

The present invention relates to a spinning reel for fishing according to the preamble of independent claim 1. Such a spinning reel for fishing is known from prior art document FR-A-1 252 667.

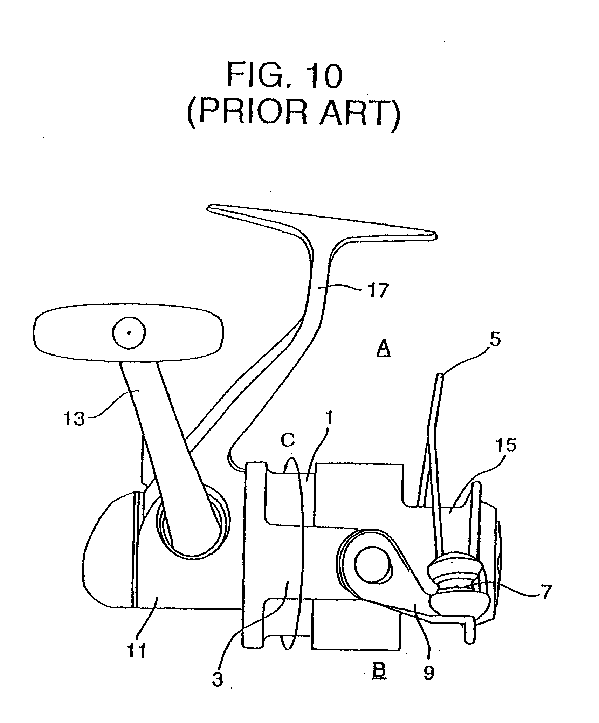

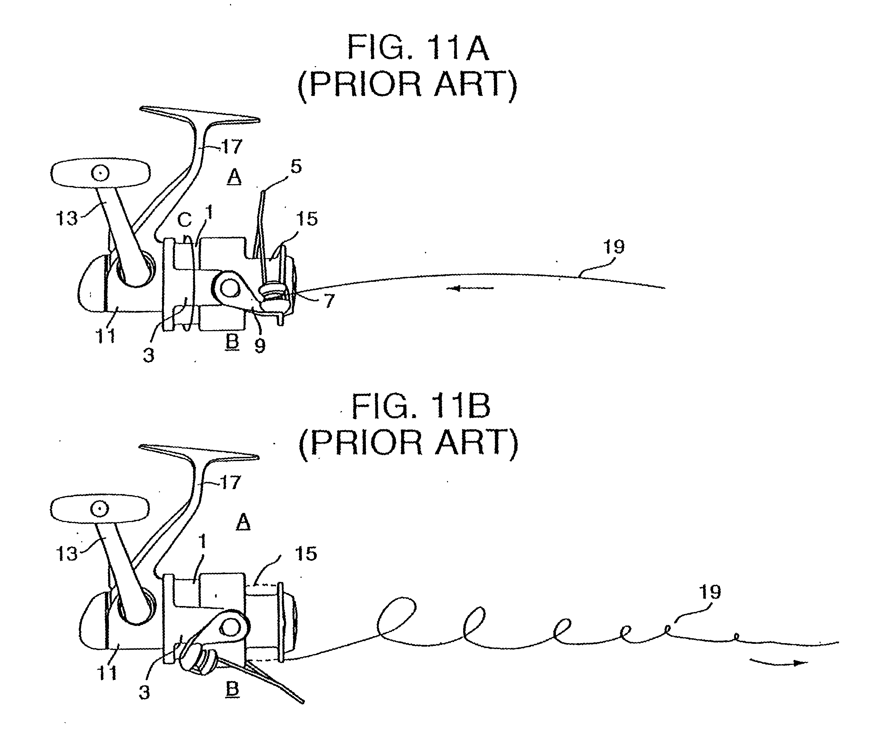

A conventional spinning reel for fishing, as shown in Figure 10, includes a semi-annular bail 5 mounted on the leading end portions of a pair of bail support arms 3 provided on a rotor 1. A bail arm 9 having a line roller 7 mounts a first end of the bail 5, and a bail holder (not shown) mounts a second end of the bail 5. Consequently, the bail 5 can be reversibly positioned on a first side of the rotor 1 (indicated by A in Figure 10, 11A or 11B) for winding a fishline onto a spool 15, and a second side of the rotor 1 (indicated by B in Figure 10, 11A or 11B) for freely playing-out the fishline off the spool 15. Reference character 17 designates a mounting leg integrally formed with the reel main body 11.

Rotating a manual handle 13 supported on the reel main body 11 turns rotor 1. Rotation in the direction indicated by arrow C (Figures 10 and 11A) winds the fishline onto the spool 15 after the bail 5 has been positioned to the fishline winding side A. Concurrently, the rotor 1 makes a reciprocating motion linked with the rotation of the rotor 1. On the other hand, casting is performed with the bail 5 positioned to the fishline playing-out side B such that fishing tackle connected to the fishline 19 may be freely delivered.

However, during casting of the conventional spinning reel, one disadvantage is that the fishline is played-out off the spool 15 in a spiral manner as shown in Figure 11B. Spiral delivery of the fishline 19 causes twists in the fishline 19 which may result in the fishline 19 becoming tangled or broken.

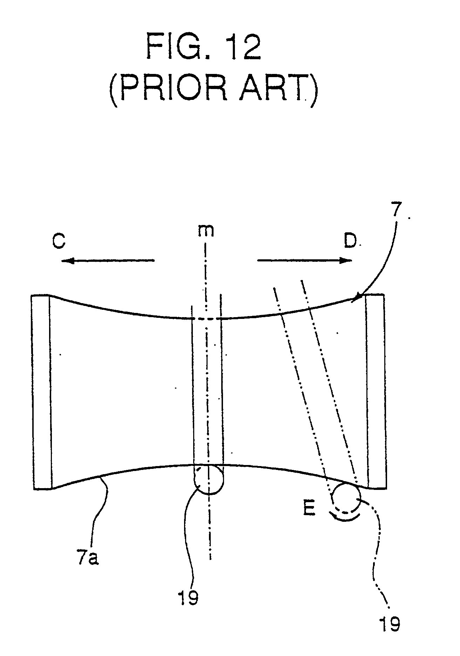

A conventional line roller 7 has a drum shaped surface for guiding fishline 19, as shown in Figure 12. The fishline 19 is normally situated at the center m of the line roller 7. However, during winding of the fishline onto the spool 15, the fishline 19 is shifted in a direction D (i.e. in a direction substantially opposite to the movement C or the line roller 7 during winding rotation of the rotor 1) as shown by two-dotted chain line in Figure 12. Since the friction between the curved surface of the line roller 7 and the fishline 19 is greater on the larger diameter portion of the line roller 7 than it is on the smaller diameter portion thereof, the line roller 7 on which the fishline 19 slides produces twists in the fishline 19 as shown by arrow E in Figure 12. The twist direction E of the fishline 19 is the same as the direction of the spiral of the fishline 19 when it is played-out from the spool 15, thereby accentuating the aforementioned disadvantage of conventional spinning reels.

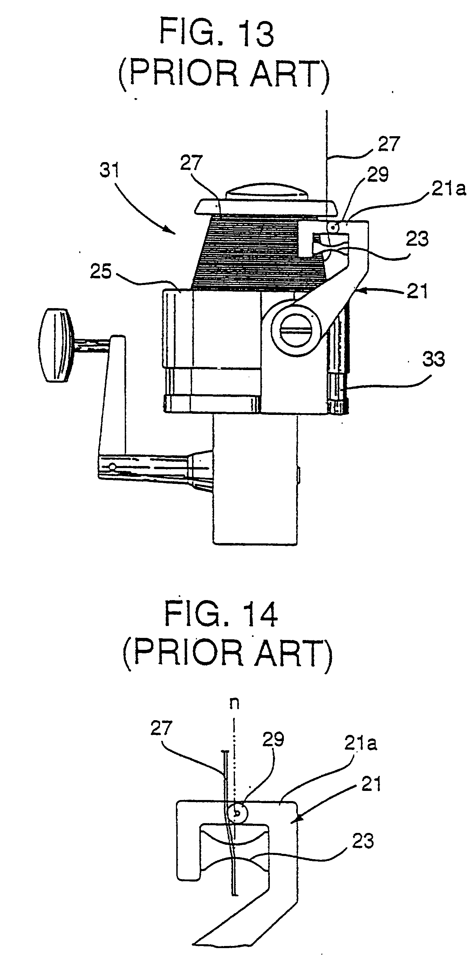

Japanese Utility Model Kokoku Publication No. Hei. 3-17661 addresses the noted disadvantage by including a line control member 29 on a spinning reel 31, as shown in Figures 13 and 14. Specifically, a U-shaped end portion 21a of a bail arm 21 supports the control member 29 for the purpose of shifting a fishline 27 from a central position n of a line roller 23 to a position closer to the end tip of the U-shaped portion 21a (i.e. toward a spool 25 referring to Figure 13).

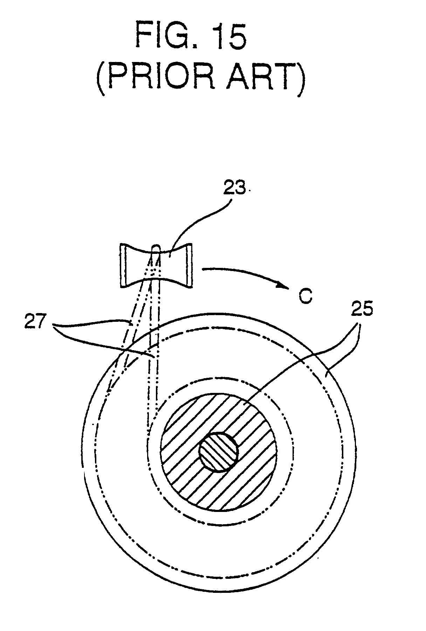

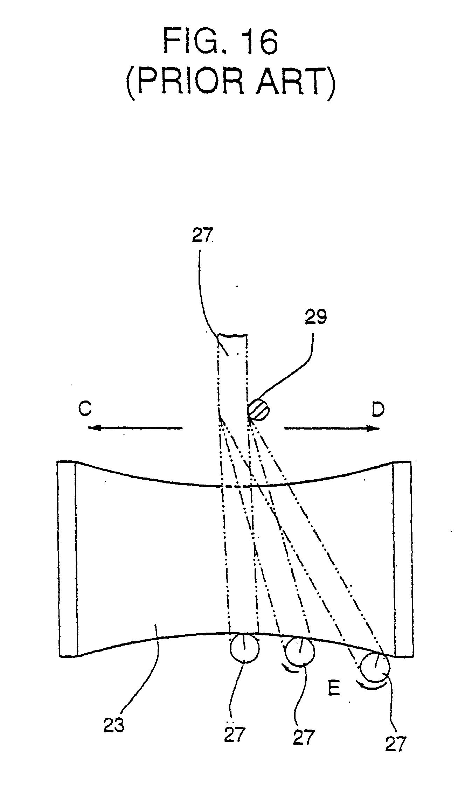

However, the spinning reel 31 fails to fully overcome the aforementioned disadvantage because the winding diameter of the fishline 27 onto the spool 25 varies according to the amount of the fishline 27 played-out from or wound on the spool 25, as shown in Figure 15. As the winding diameter of the fishline 27 onto the spool 25 increases, the fishline 27 is shifted in a direction of arrow D as shown in Figure 16. The line control member 29 is only capable of restricting the shifting of the fishline 27 from a distal position with respect to the line roller 23. Therefore, the line roller 23 in the fishing reel 31 still produces adverse twisting of the fishline 27 in the same direction E when the fishline 27 is played-out.

Consequently, the spinning reel as disclosed in Japanese Utility Model Kokoku Publication No. Hei. 3-17661 is adversely influenced by the winding diameter of the fishline 27 on the spool 25 and thus is not always capable of achieving its desired objective.

It is an objective of the present invention to provide a spinning reel for fishing as indicated above, wherein the fishline is prevented from becoming tangled in a line roller guiding the fishline onto a spool during winding of the fishline.

According to the present invention, this objective is solved by a spinning reel for fishing according to claim 1.

It is a special advantage of such a spinning reel for fishing to eliminate the accumulation of twists in a fishline without being affected by the winding diameter of the fishline.

Preferred embodiments of the present invention are laid down in the respective dependent claims.

Hereinafter the present invention is illustrated and explained by means of preferred embodiments in conjunction with the accompanying drawings. In the drawings wherein:
Figure 1 is a front elevation view of a spinning reel for fishing according to a first embodiment,
Figure 2 is a left-side elevation view of the spinning reel for fishing shown in Figure 1,
Figure 3 is a cross-section view of the featured components of a spinning reel for fishing according to the first embodiment,
Figure 4 is a cross-section view of a line roller in a spinning reel for fishing according to a second embodiment,
Figure 5 is a cross-section view of the featured components of a spinning reel for fishing according to a third embodiment,
Figure 6 is a cross-section view of a line roller in a spinning reel for fishing according to a fourth embodiment,
Figure 7 is a cross-section view of the featured components of a spinning reel for fishing according to a fifth embodiment,
Figure 8 is a cross-section view of the featured components of a spinning reel for fishing according to a sixth embodiment,
Figure 9 is a cross-section view of the featured components of a spinning reel for fishing according to a seventh embodiment,
Figure 10 is a front elevation view of a conventional spinning reel for fishing,
Figure 11A shows the state of a fishline during the fishline winding operation of a conventional spinning reel,
Figure 11B shows the state of a fishline during the fishline playing-out operation of a conventional spinning reel,
Figure 12 is an explanatory view of the movements and twisting of a fishline during the fishline winding operation of a conventional line roller,
Figure 13 is a plan view of another conventional spinning reel for fishing,
Figure 14 is an enlarged view of a portion of the conventional spinning reel for fishing shown in Figure 13,
Figure 15 is an explanatory view of the effects of variations in the line winding diameter,
Figure 16 is an explanatory view of the movements and twisting of a fishline due to variations in the line winding diameter of a conventional spinning reel for fishing.

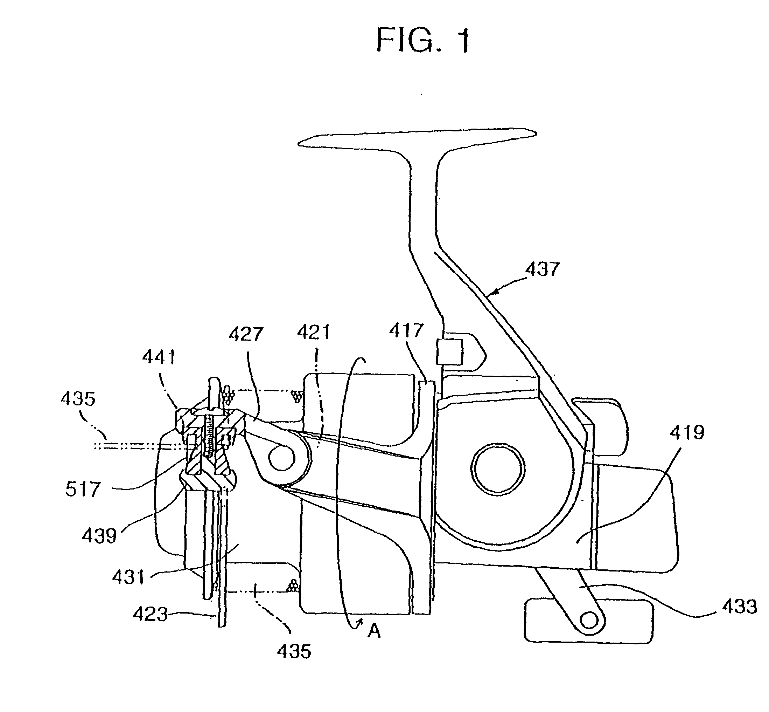

Figures 1 to 3 show a spinning reel for fishing according to a first embodiment . A rotor 417 is rotatably supported on a reel main body 419 and includes a pair of integral bail support arms 421. As shown in Figure 50, one end of a semi-annular bail 423 is mounted on one of the bail support arms 421 by a bail arm 427 with a line roller 517, and the other end of the bail 423 is mounted on the other bail support arm 421 via a bail holder 429. Consequently, the bail 423 is freely reversible between a fishline winding side of the rotor 417 and a fishline play-out side of the rotor 417.

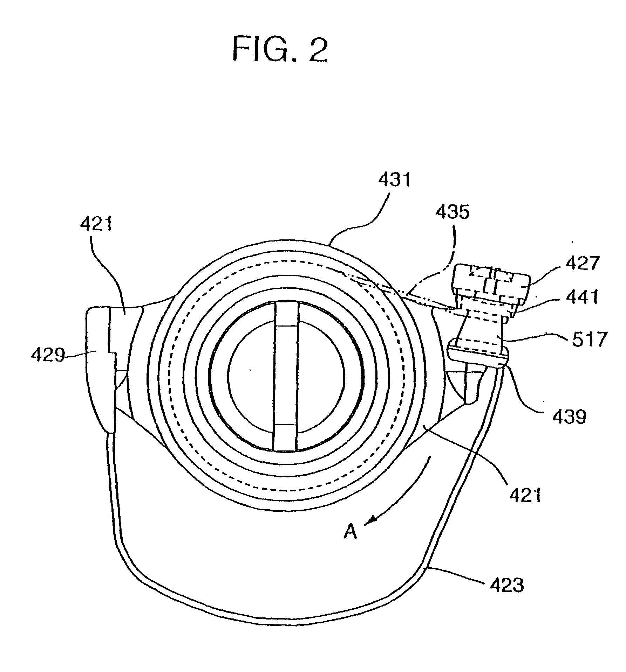

A spool 431 is arranged coaxially with respect to the rotor 417 and is supported by a spool shaft (not shown) mounted on the reel main body 419 for relative reciprocal movement with respect thereto. A fishline 435 is wound onto the spool 431 by positioning the bail 423 on the fishline winding side of the rotor 417, and turning a handle 433 to concurrently rotate the rotor 417 (in the fishline winding direction A shown in Figures 1 and 2) and reciprocate the spool 431.

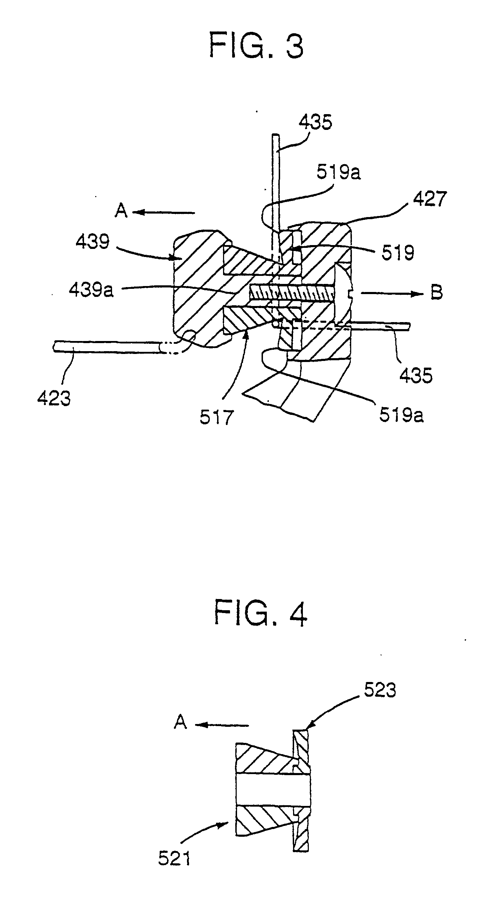

Figure 3 show cross-section views of the line roller 517 supported by the bail arm 427. A substantially T-shaped line slider 439 includes a shaft portion 439a secured to the bail arm 427. The line roller 517, which is rotatably supported on the shaft portion 439a, includes a tapered fishline guide portion extending between two opposite axial ends of the line roller 425. The diameter of the fishline guide portion 425a increases in a direction from the bail arm 427 toward the line slider 439, i.e. in the fishline winding direction of rotation by the rotor 417.

As described above, the line roller 517 is tapered such that the diameter increases in the fishline winding direction of rotation by the rotor 417. Preferably, the taper angle of the line roller 517 is within the range of 1° to 10°.

Generally, the line roller 517 is constructed from various kinds of hard material including ceramics, copper alloy or the like which have received a hard plating treatment, or other commonly known materials for line rollers.

Turning the handle 433 rotates the rotor 417 in the fishline winding direction A of rotation which causes the fishline 435 being guided by the line roller 517 to shift in the direction B (i.e. in the opposite direction to the fishline winding direction).

Figure 3 shows the featured components of a spinning reel for fishing according to a first embodiment The diameter of a line roller 517, which increases in the fishline winding direction A of rotation by the rotor 417, is rotatably supported on the shaft portion 439a of the line slider 439. An integral disk-like guide projection 519 is fixed near the axial end of the line roller 517 proximate to the bail arm 427. A side surface of the guide projection 519 facing the line slider 439 has a recess which increases in depth from the radially outer edge 519a of the guide toward the line roller 517. During winding, only the peripheral edge 519a contacts the fishline 435 to restrict the movement of the fishline 435 in the direction B and maintain the fishline 435 at a desired position along the line roller 517.

Turning the handle 433 rotates the rotor 417 in the fishline winding direction A of rotation which causes the fishline 435 in contact with the line roller 517 to shift in the direction B. The peripheral edge 519a of the guide projection 519 contacts the fishline 435 to restrict such shifting of the fishline 435, thereby maintaining the fishline 435 at the desired position along the line roller 517.

An increase in the line winding diameter on the spool 431 also causes the fishline 435 in contact with the line roller 517 to shift in the direction B. Again, the peripheral edge 519a contacts the fishline 435 to restrict such shifting of the fishline 435, thereby maintaining the fishline 435 at the desired position along the line roller 517.

As previously described, inasmuch as the line roller 517 has a tapered shape wherein the diameter increases in the fishline winding rotation direction, friction between the line roller 517 and the fishline 435 increases as the diameter of the line roller 517 increases. Consequently, the fishline 435 is intentionally twisted in the opposite direction to line twists which occur during casting. The line twists on the fishline 435 produced during winding and the line twists occurring during casting mutually cancel, thereby eliminating spiral delivery of the fishline 435 from the spool 431 during casting. The first embodiment, achieves the object of the present invention.

Figure 4 shows a second embodiment wherein, instead of the line roller 517 according to the thirty-first embodiment, a line roller 521 has a guide piece 523 formed separately and subsequently fixed near the axial end of the line roller 521 proximate to the bail arm 427.

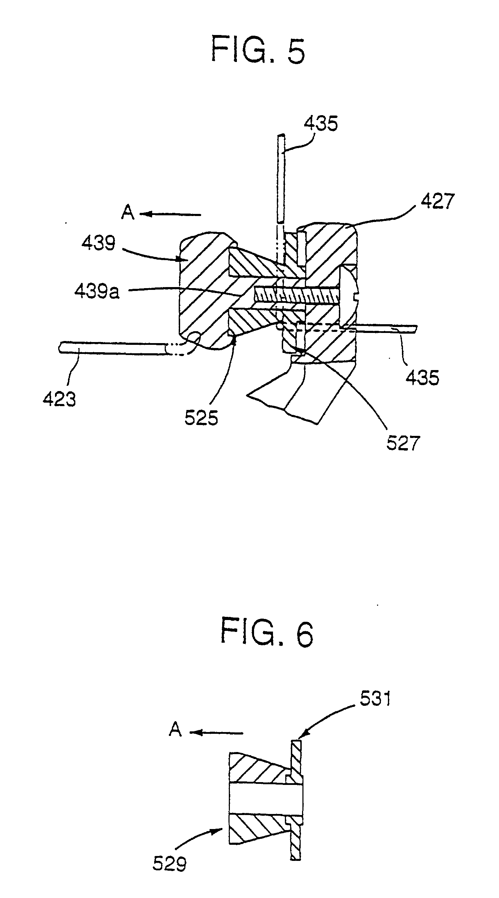

Figure 5 shows the featured components of a spinning reel for fishing according to a third embodiment. As in the first embodiment, the diameter of a line roller 525, which increases in the fishline winding direction A of rotation by the rotor 417, is rotatably supported on the shaft portion 439a of the line slider 439. An integral disk-like guide projection 527 is fixed near the axial end of the end of the line roller 517 proximate to the bail arm 427. The guide projection 527 has a uniform thickness. During winding, the guide projection 527 contacts the fishline 435 to restrict shifting of the fishline 435 and maintain the fishline 435 at a desired position along the line roller 525.

Figure 6 shows a fourth embodiment wherein, instead of the line roller 525 according to the thirty-third embodiment, a line roller 529 has a guide piece 531 formed separately and subsequently fixed near the axial end of the line roller 529 proximate to the bail arm 427.

According to each of the first through fourth embodiments , the object of the present invention can be achieved. However, inasmuch as the guide projection 527 and guide piece 531 of the third and fourth embodiments do not have the recessed side surface of the thirty-first and thirty-second embodiments, manufacture and machining of the line roller 525 and guide are simplified.

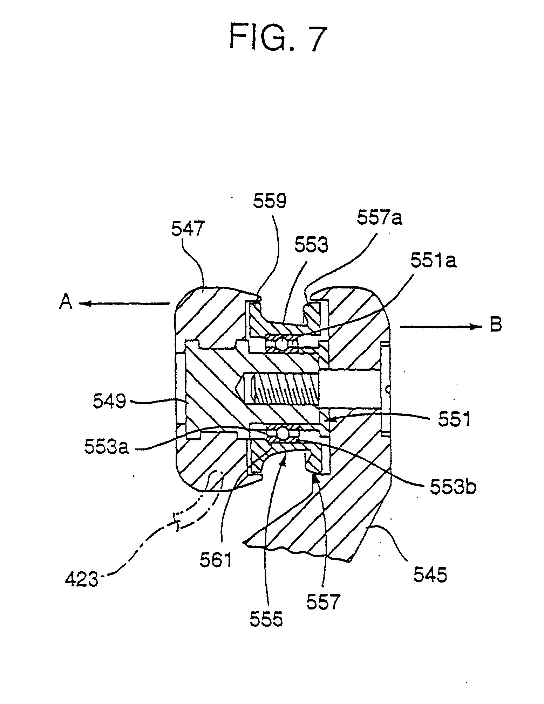

Figures 7 to 9 shows the featured components of spinning reels for fishing according to a fifth through seventh embodiments. Elements of these embodiments of the present invention which are similar to the first embodiment are given the same designations and repetitive descriptions are omitted.

According to the fifth embodiment , a line slider 547 fixed to a metal support shaft 549 is attached to a bail arm 545. A metal cylindrical member 551 is interposed and held between the support shaft 549 and the bail arm 545. A bearing 553 supports a line roller 555 on the support shaft 549. The bearing includes an inner race 553a abutted against an end 551a of the cylindrical member and an outer race 553b abutted against a securing shoulder 561 on the interior of the line roller. The end 551a of the cylindrical member and the securing shoulder 561 of the line roller 555 restrict longitudinal movement of the bearing 553 with respect to the support shaft 549 and the line roller 555.

The diameter of a tapered line roller 555 increases in the fishline winding direction A of rotation by the rotor 417. The line roller 555 includes an integral annular guide projection 557 at the axial end proximate to the bail arm 545. The guide projection 557 has a guide 557a extending toward the longitudinal midpoint of the line roller 555. During winding, only the guide 557a contacts the fishline 435 to restrict the movement of the fishline 435 in the direction B and maintain the fishline 435 at a desired position along the line roller 555.

A disk-shaped guide projection 559 is integrally formed at an axial end of the line roller 555 proximate to the line slider 547. The guide 559 restricts shifting of the fishline 435 in the direction A when the fishline 435 is played-out from the spool against the resistance of a drag mechanism during winding, thereby preventing the fishline 435 from becoming tangled between the line slider 547 and line roller 555.

Turning the handle 433 rotates the rotor 417 in the fishline winding direction A of rotation by the rotor 417. The fishline 435 shifts in the direction B opposite to the fishline winding direction A, however the guide 557a contacts the fishline 435 restricting such shifting to prevent the fishline 435 from becoming tangled between the line roller 555 and bail arm 545. Concurrently, engagement between the ball bearing 553 and the securing shoulder 561 prevents the line roller 555 from contacting the bail arm 545. Inasmuch as the ball bearing 553 reduces friction and positions the line roller 555, the fishline 435 can be wound more easily and efficiently.

The guide projection 559 restricts shifting of the fishline 435 in the direction A when the fishline 435 is played-out from the spool against the resistance of a drag mechanism during winding, thereby preventing the fishline 435 from becoming tangled between the line slider 547 and line roller 555.

An increase in the line winding diameter on the spool 431 also causes the fishline 435 in contact with the line roller 555 to shift in the direction B. However, the guide 557a contacts the fishline 435 to restrict such shifting of the fishline 435, thereby maintaining the fishline 435 at substantially the longitudinal midpoint of the line roller 555.

As previously described, inasmuch as the line roller 555 has a tapered shape wherein the diameter increases in the fishline winding rotation direction A, friction between the line roller 555 and the fishline 435 increases as the diameter of the line roller 555 increases. Consequently, the fishline 435 is intentionally twisted in the opposite direction to line twists which occur during casting. The line twists on the fishline 435 produced during winding and the line twists occurring during casting mutually cancel, thereby eliminating spiral delivery of the fishline 435 from the spool 431 during casting.

The two guide projections 557,559 restrict movement of the fishline 435 in the directions B and A, respectively, during fishline winding, thereby eliminating the possibilities that the fishline 435 may become tangled between the line roller 555 and bail arm 545 or line slider 547.

In a smuch as the size of the bail arm 427 according to the fifth embodiment is minimized, the weight of the bail arm 427 is not centered forward of the spinning reel, and the dynamic balance of the rotor 417 is not adversely affected by the bail arm 427. Additionally, winding the fishline 435 twists the fishline 435 in the opposite direction to the line twists which occur during casting, thereby preventing the accumulation of line twists caused by repeated winding and play-ing out in conventional spinning reels.

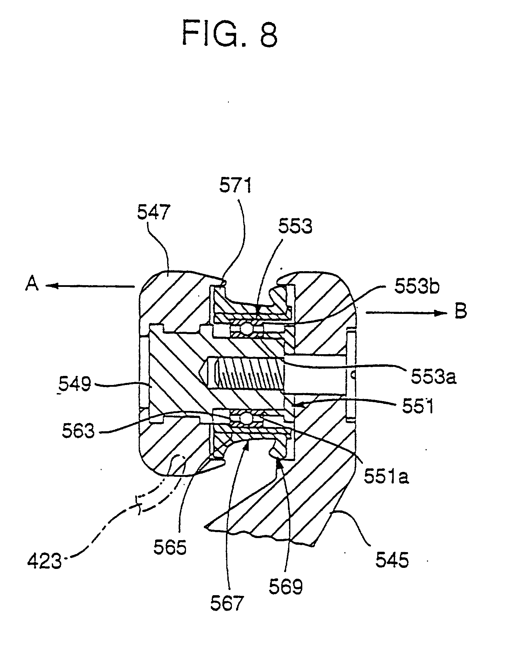

Figure 8 shows the featured components of a spinning reel for fishing according to a sixth embodiment. As described with respect to the fifth embodiment, the securing shoulder 561 projected directly from the interior periphery of the line roller 555 to restrict movement of the line roller 555 in the direction B. According to the sixth embodiment, a cylindrical securing collar 565 with a radially inward projecting securing shoulder 563 is received in the interior periphery of a line roller 567 to restrict the movement of the line roller 567 in the direction B.

The diameter of a tapered line roller 567 increases in the fishline winding direction A of rotation by the rotor 417. The line roller 567 includes an integral annular guide projection 569 at the axial end proximate to the bail arm 545, as well as a guide projection 571 similar to the guide projection 559 which is integral with the axial end of the line roller 567 proximate to the line slider 547. The desired object of the present invention can be achieved according to the sixth embodiment similar to the above embodiments.

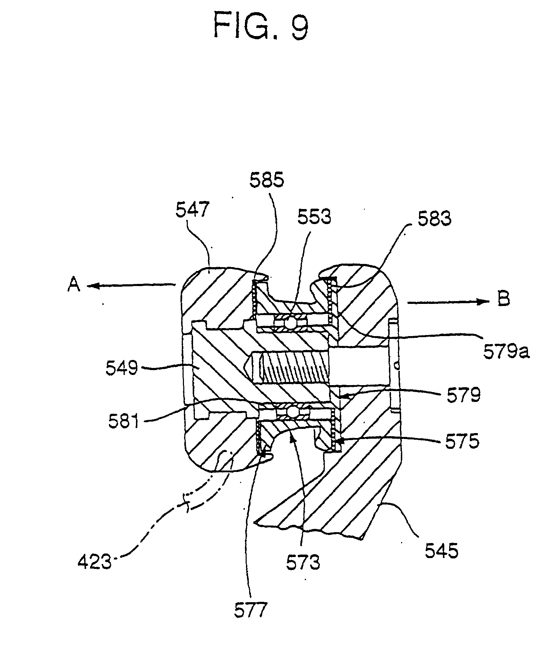

Figure 9 shows the featured components of a spinning reel for fishing according to a seventh embodiment. A line roller 573, the diameter of which increases in the fishline winding direction A of rotation by the rotor 417, is rotatably mounted on a support shaft portion 549 via a bearing 553. The line roller 573 includes an integral annular guide projection 575, similar to the guide projection 569, at the axial end proximate to the bail arm 545. A guide projection 577 similar to the guide projection 571 is integral with the axial end of the line roller 573 proximate to the line slider 547.

Two cylindrical members 579 and 581 supported on the periphery of the support shaft 549 position the bearing 553. The radial flange 579a of the cylindrical member 579 contacts the side surface of the bail arm 545. Ring-shaped resin washers 583 and 585 are mounted between the flange 579a and line roller 573, as well as between the line roller 573 and the line slider 547, respectively.

Unlike the fifth and sixth embodiments, which include the securing shoulders 561 and 563, the seventh embodiment enables the line roller 573 to shift in both the directions A and B during fishline winding. However, the resin washers 583 and 585 reduce the friction resistance as opposed to the line roller 573 contacting the flange 579a or the line slider 547.

## Claims

1. Spinning reel for fishing comprising:
a reel main body (419);
a spool (431) supported on said reel main body (419);
a rotor (417) rotatably supported with respect to said reel main body (419) for winding a fishline (435) onto said spool (431), said rotor includes an arm (427); and
a line roller (517,521,525,529,555,567) mounted on said arm (427) and
rotatable about an axis, said line roller contacts the fishline (435) and guides it onto said spool (431) during winding, said line roller includes a first axial end proximate said arm (427), a second axial end opposite said first end, and a fishline guide surface extending about said axis between said first and second axial ends, **characterized in that** said fishline guide surface has a diameter which increases towards said second axial end and a flange radially extending from said first axial end, wherein said fishline (435) contacts said flange (519,523,527,531,557,569) before contacting said fishline guide surface during winding.

2. Spinning reel according to claim 1, **characterized in that** said flange (519,523,557,569) comprises a side surface facing the fishline guide surface, said side surface having a portion radially apart from said fishline guide surface, which portion extends over said fishline guide surface.

3. Spinning reel according to claim 2, **characterized in that** said side surface of said flange (519,523,557,569) has a recess which increases in depth in radially inward direction.

4. Spinning reel according to claim 1 or 2, **characterized in that** said flange (527,531) is formed by a disk having a uniform thickness.

5. Spinning reel for fishing according to one of claims 1 to 4, **characterized in that** a taper angle between a longitudinal tangent to said fishline guide surface and said line roller axis is in a range of 1° to 10°.

## Patentansprüche

1. Angelwinde mit:
einem Windenhauptkörper (419);
einer Spule (431), gelagert an dem Windenhauptkörper (419);
einem Rotor (417), der drehbar in Bezug auf den Windenhauptkörper (419) zum Aufwickeln einer Angelschnur (435) auf der Spule (431) gelagert ist, wobei der Rotor einen Arm (427) aufweist; und
eine Schnurrolle (517,521,525,529,555,567), montiert an dem Arm (427) und drehbar um eine Achse, wobei die Schnurrolle die Angelschnur (435) berührt und sie auf die Spule (431) während des Wickeins führt, wobei die Schnurrolle ein erstes axiales Ende benachbart zu dem Arm (472) aufweist, ein zweites axiales Ende, gegenüberliegend zu dem ersten Ende, und eine Angelschnur-Führungsoberfläche, die sich um die Achse zwischen dem ersten und zweiten axialen Ende erstreckt, **dadurch gekennzeichnet, daß** die Angelschnur-Führungsoberfläche einen Durchmesser aufweist, der in Richtung auf das zweite axiale Ende zunimmt, und einen Flansch, der sich radial von dem ersten axialen Ende erstreckt, wobei die Angelschnur (435) den Flansch (519,523,527,531, 557,569) berührt, bevor sie während des Wickelns die Angelschnur-Führungsoberfläche berührt.

2. Angelwinde nach Anspruch 1, **dadurch gekennzeichnet, daß** der Flansch (519,523,557,569) eine Seitenoberfläche aufweist, die der Angelschnur-Führungsoberfläche zugewandt ist, wobei die Seitenoberfläche einen Abschnitt aufweist, der radial von der Angelschnur-Führungsoberfläche getrennt ist, wobei dieser Abschnitt sich über die Angelschnur-Führungsoberfläche erstreckt.

3. Angelwinde nach Anspruch 2, **dadurch gekennzeichnet, daß** die Seitenoberflächen des Flansches (519,523,557,569) eine Ausnehmung aufweist, die in ihrer Tiefe in radial einwärtiger Richtung zunimmt.

4. Angelwinde nach Anspruch 1 oder 2, **dadurch gekennzeichnet, daß** der Flansch (527531) durch eine Scheibe von gleichmäßiger Dicke gebildet wird.

5. Angelwinde nach einem der Ansprüche 1 bis 4, **dadurch gekennzeichnet, daß** ein Kegelwinkel zwischen einer Längstangente an die Angelschnur-Führungsoberfläche und der Schnurrollenachse in einem Bereich von 1° bis 10° liegt.

## Revendications

1. Moulinet de pêche comprenant :
un corps principal de moulinet (419);
une bobine (431) montée sur ledit corps principal de moulinet (419) ;
un rotor (417) monté tournant par rapport audit corps principal de moulinet (419) afin d'enrouler une ligne de pêche (435) sur ladite bobine (431), ledit rotor comprenant un bras (427); et,
un rouleau de ligne (517, 521, 525, 529, 555, 567) monté sur ledit bras (427) et susceptible de tourner autour d'un axe, ledit rouleau de ligne venant en contact avec ladite ligne de pêche (435) et la guidant sur ladite bobine (431) durant l'enroulement, ledit rouleau de ligne comprenant une première extrémité axiale à proximité dudit bras (427), une deuxième extrémité axiale opposée à ladite première extrémité, et une surface de guidage de ligne de pêche s'étendant autour dudit axe entre lesdites première et deuxième extrémités axiales, **caractérisé en ce que** ladite surface de guidage de ligne de pêche a un diamètre qui augmente vers ladite deuxième extrémité axiale, et une bride s'étendant radialement à partir de ladite première extrémité axiale, dans lequel ladite ligne de pêche (435) vient au contact de ladite bride (519, 523, 527, 531, 557, 569), avant de venir au contact de ladite surface de guidage de rouleau de ligne durant ledit enroulement.

2. Moulinet de pêche selon la revendication 1, **caractérisé en ce que** ladite bride (519, 523, 557, 569) comprend une surface latérale en face de la surface de guidage de ligne de pêche, ladite surface latérale ayant une position séparée radialement de ladite surface de guidage de ligne de pêche, cette portion s'étendant sur ladite surface de guidage de ligne de pêche.

3. Moulinet de pêche selon la revendication 2, **caractérisé en ce que** ladite surface latérale de ladite bride (519, 523, 557, 569) a un creux dont la profondeur s'accroît en direction radialement intérieure.

4. Moulinet de pêche selon la revendication 1 ou 2, **caractérisé en ce que** ladite bride (527, 531) est formée par un disque ayant une épaisseur uniforme.

5. Moulinet de pêche selon l'une quelconque des revendications 1 à 4, **caractérisé en ce qu'**un angle d'effilement entre une tangente longitudinale à ladite surface de guidage de ligne de pêche et ledit axe de rouleau de ligne est compris dans une plage allant de 1° à 10°.
